# EUROPEAN PATENT SPECIFICATION

(11) **EP 0 545 489 B1**
(45) Date of publication and mention of the grant of the patent: **27.03.1996**
(21) Application number: 92203678.5
(22) Date of filing: 27.11.1992
(51) Int. Cl.: A23C 15/16

(54) **Process for preparing a spread having a reduced fat content**
Verfahren zur Herstellung eines fettarmen Brotaufstrichs
Procédé de préparation d'une pâte à tartiner à faible teneur en graisse

(30) Priority: 29.11.1991 NL 9102010
(43) Date of publication of application: 09.06.1993
(73) Proprietor: STICHTING NEDERLANDS INSTITUUT VOOR ZUIVELONDERZOEK, 6718 ZB Ede (NL)
(72) Inventor: Schaap, Johannes Eduard, NL-6741 KK Lunteren (NL)
(74) Representative: van Gennip, Johannes Simeon Wilhelmus

(56) References cited:
- EP-A- 0 276 517
- EP-A- 0 393 739
- WO-A-83/00005
- FR-A- 2 261 713
- FR-A- 2 319 300

## Description

This invention relates to a process for the continuous preparation of a (sandwich) spread of the water-in-oil type, having a fat content of 30-60 wt. %, based on milk fat, in which a fatty phase and an aqueous phase, to which a milk protein and a thickener have been added, are mixed.

Known are low-calorie spreads having fat contents between 60 and 30%, which, on the ground of regulations or with a view to stability and quality, contain protein and/or thickeners.

Such a product is described in Dutch patent application 7502259, corresponding to French patent application 2 261 713. A hydrocolloid mixture and a water-soluble protein are added to water, whereafter the aqueous phase is pasteurized and is dispersed in the fatty phase. Then citric acid is added to the mixture so as to adjust to a pH value of 5.15-5.3.

EP-A-0 368 805 describes the batchwise preparation of spreadable butter having a reduced fat content by reducing and kneading a butter mass in a special manner, adding thereto an amount of natural lactic acid concentrate and subsequently adding a second aqueous phase, which contains caseinate, whereafter the components are mixed by kneading under a temperature rise caused by the heat of friction. This manner of kneading and mixing supposedly yields an improved spreadability.

It is indeed a problem associated with spreads based on milk fat that some time after preparation, during storage, the products acquire a firmness that has a negative effect on the spreadability: at refrigerator temperature the products are no longer spreadable.

EP 0 393 739 describes the preparation of a spreadable product, in which an emulsion of the water-in-oil type is mixed with an emulsion of the oil-in-water type. Apart from the fact that the water-in-oil emulsion used does not consist of butter but of an emulsion having a low fat content, two different fats must be present in the product finally obtained. Further, in the preparation described, the importance of the size of the fat particles in the oil-in-water emulsion is not taken into account at all.

French patent application 2 319 300 describes the preparation of an edible emulsion, in which the fat-continuous phase preferably consists of milk fat, fractionated milk fat, butter, or other edible fats such as soy bean oil, sunflower oil, maize oil, arachis oil, lard or beef fat. For the aqueous phase, too, countless possibilities are mentioned, including cream. In no way can it be derived from this publication that for obtaining the proper consistency of the finished edible product, the aqueous phase must contain fat, let alone the importance of homogenization of the aqueous phase such that the average diameter of fat particles therein is at most 1.2 µm.

It has now been found that the spreadability of the final product can be favourably influenced by starting, in the preparation, from butter as the fatty phase and using as the aqueous phase a homogenized cream in which the average diameter of the fat globules has a value of at most 1.2 µm, which aqueous phase is pumped into the fatty phase continuously.

Although the cream contains fat, this cream, including any additives, will be referred to as aqueous phase in the description of the invention. The other stream, which consists of butter, which may or may not include additives, will be referred to as fatty phase. Within the framework of the invention, by "butter" is meant the product as described in the Dutch Agricultural Quality Decree.

In carrying out the process according to the invention, one starts, on the one hand, from butter having a fat content of at least 80% and, on the other, from cream having a certain fat content. The fat content of the cream can be selected on the ground of the nature of the butter used and the fat content desired in the final product: it has been found that according as a product of better spreadability at lower temperatures is desired, the fat content of the cream must be higher, whilst butter from winter fat must be mixed with fatter cream than butter from summer fat if equal spreadability of the product is to be achieved.

As for the fatty phase, it is not obligatory to start from the high-aromatic butter that is conventional in some countries, as prepared, for instance, according to Dutch patent application 7513464. Butter prepared from non-acidified or weakly acidified cream is eminently useful as well. Especially in the latter case, it is preferable to add some diacetyl in the preparation of the present spread so as to achieve a diacetyl content in the final product of at least 1 mg/kg.

Preferably, in order to give the spread according to the invention a fresh-acid taste and a good bacteriological keepability, such an amount of acid is mixed into the fatty phase that the pH value of the serum of the final product is lower than 5.5. More preferably, to that end, a biologically obtained lactic acid solution (concentrated starter permeate) is used.

The aqueous phase consists of cream to which at least a thickener and a milk protein have been added. The milk fat in the cream can optionally be partly or wholly replaced with a different, vegetable or animal, fat. Thus, the process according to the invention is eminently useful to prepare a spread whose fat consists of a mixture of milk fat and soy bean oil; in that case the soy bean oil can be added via the cream, i.e., the aqueous phase, to the butter serving as starting material. This prevents permanent lack of consistency of the final product.

According to a preferred embodiment, the diluted cream has a fat content of 5-15% by weight.

Before the cream is pasteurized, it is homogenized, as noted. The homogenization treatment preferably takes place at a temperature of 50-90°C and a pressure of 5-20 MPa. This treatment, too, has an influence on the spreadability of the spread.

Preferably, the lactose content of the cream is set so that this content in the spread does not exceed a value of 1.5%: it has been found that by virtue of this feature, the organoleptic quality of the spread is increased. For setting the lactose content, the fatty cream is preferably diluted with water. The calculation of the required amount of water is easy to make for given values of the desired fat contents in the cream and in the final product and the desired lactose content in the spread.

To adjust the protein content of the spread to the desired level, subsequently a milk protein, preferably caseinate, is added to the cream, whilst gelatin is admixed with a view to keeping the cream stable during the later mixing with the fatty phase.

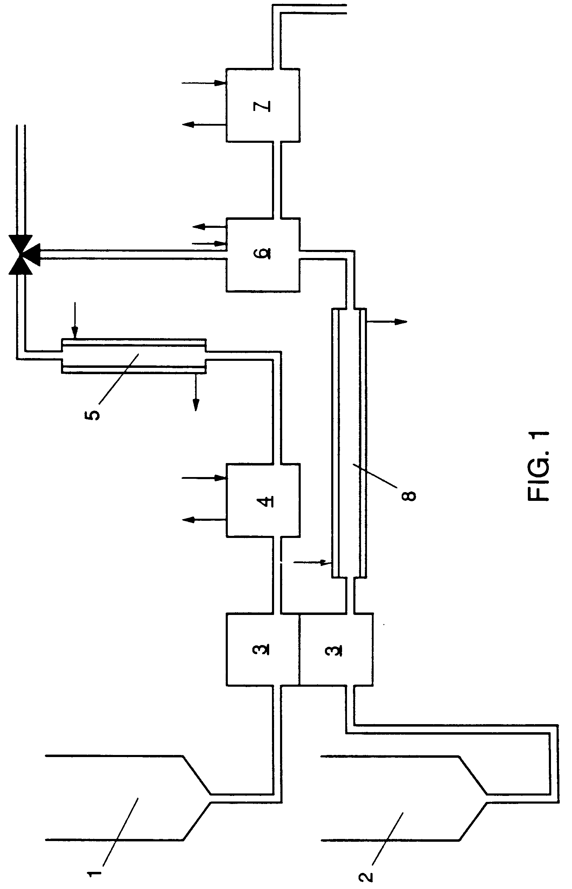

The principle of the practice of the process according to the invention is shown in Fig. 1, which is a schematic diagram of the sequence of the most important devices to be used in practising the process.

For the preparation of the aqueous phase, a standardized cream is prepared from thermalized cream, in such a manner that a desired fat content and a desired lactose content are achieved. The standardized cream is homogenized at 70°C in such a manner that the fat globules obtained have an average diameter of less than 1.2 µm. The homogenized cream is mixed with caseinate, gelatin, and, if desired, other additives such as colouring. The mixture of cream and additives is heated for 8 min at 78°C, de-aerated and subsequently cooled. Then the thus prepared cream is stored in storage vessel 1 at, for instance, 4°C, until the time of processing. Prior to processing, this aqueous phase is heated again to at least 30°C.

For the preparation of the fatty phase, butter is mixed with such an amount of concentrated starter permeate (a concentrate of a biologically obtained lactic acid solution; Centrale Aankoop B.V., Arnhem) that the final product will achieve the desired pH value. The required amount is simple to determine by titration of a sample of the aqueous phase until the desired pH value is achieved.

This butter mixture is transferred to storage vessel 2, from which the dosing pump 3 is supplied.

By means of a dosing pump 3 the aqueous phase mentioned earlier is passed via a cooler 4 and a rest tube 5 to mixer 6, where this aqueous phase is mixed into the fatty phase which is supplied, also by means of a dosing pump 3, through a duct with a temperature control 8. It is important that the aqueous phase is mixed into the fatty phase and not the other way around. To that end, mixer 6 is filled with fatty phase before the aqueous phase reaches the mixer. Preferably, use is made of one double-headed dosing pump by which, on the one hand, the aqueous phase is passed to mixer 6 via cooler and rest tube, and, on the other, the fat phase is passed directly to mixer 6, so that the two streams can be accurately proportioned. Finally, the product can be adjusted to the desired temperature by means of a heat exchanger 7 before filling of the packaging units.

The invention will now be illustrated in and by the following examples.

The size of the fat globules in the aqueous phase was measured by means of a Malvern Model 2600 Particle Sizer. The products obtained according to these examples were examined regarding the fat content (NEN 3758), the lactose content (IDF Prov. Standard 141A: 1990) and the spreadability, expressed as flow limit (g/cm²) at 14°C after storage for seven days (J. Am. Oil Chem. Soc. 36 [1959] 345; J. Am. Oil Chem. Soc. 42 [1965] 27). Moreover, the products were presented to a panel of experienced tasters.

### Example 1

### Formulation:

| "aqueous phase" | |
|---|---|
| cream (10 wt.% fat) | 16.7 kg |
| sodium caseinate (88 wt.% protein) | 1.77 kg |
| gelatin (Rousselot 101-300 p30) | 0.25 kg |
| anatto colouring E 160 b | 0.02 kg |
| starter distillate (1000 mg diacetyl/kg) | 0.02 kg |
| potassium sorbate | 0.02 kg |

| "fatty phase" | |
|---|---|
| butter | 14.17 kg |
| starter permeate (1800 °N) | 0.34 kg |

The cream standardized with skimmed milk at 10 wt.% fat was priorly homogenized (Rannie homogenizer; 70°C, 10 MPa), cooled to 50°C and transferred to a Stephan mixer. In this mixer the cream was de-aerated for 5 min at 0.06 MPa and 900 rpm; then a mixture of caseinate, gelatin and potassium sorbate, as well as the colouring solution, was added via a funnel on the dosing valve. After adding, stirring took place for 5 min at 0.06 MPa and 2700 rpm. The solution was then heated to 69°C, kept warm for 8 min at 0.06 MPa, and cooled to 28°C. Meanwhile, after a temperature of 35°C had been reached, the starter distillate had been added. This aqueous phase was stored in a spiral mixer (storage vessel 1) until the time of processing. The average diameter of the fat globules in the aqueous phase appeared to be 0.9 µm; 62.5% of the fat in the aqueous phase consisted of globules having a diameter value below 1.2 µm.

Cold butter was cut into pieces such that they could be introduced into a Stephan mixer, whereafter the blades (position I), the transport wing and the vacuum pump were switched on. After mixing for about 20 min at 0.06 MPa, the butter had reached the desired temperature of 21°C; during heating the starter permeate had been added. The thus obtained fatty phase was stored in a hopper (storage vessel 2).

At the beginning of the preparation of the final product, first, mixer 6 (in this case a Schröder pin mill; speed 400-700 rpm) was filled with the fatty phase before the aqueous phase was added. The duct for the fatty phase downstream of the dosing pump was cooled with water, if necessary, so as to control the mixing temperature in mixer 6.

The aqueous phase was adjusted to 14°C via a Schröder "surface-scraped" heat exchanger (cooling water temperature - 10°C), passed to mixer 6 via a vertically arranged rest tube (wall temperature 25°C; residence time 6 min), and in mixer 6 the aqueous phase and fatty phase were mixed with each other. The temperature downstream of mixer 6 was set at 18-19°C, if necessary by cooling the mixer with ice water. The aqueous phase and the fatty phase were both pumped from the storage vessels through the system by means of a double-headed Bran and Lubbe dosing pump; the counterpressure in the system was 0.45-0.85 MPa. The fatty phase stream was set in such a manner that the final product obtained a fat content of 45.2 wt.%.

The product issuing from mixer 6 was subsequently passed through a Schröder "surface-scraped" heat exchanger (cooling water temperature - 10°C; speed 400-600 rpm), while, however, the temperature of the product was maintained above 10°C so as to prevent phase separation. Finally, in a filling attachment, small vats were filled with the product obtained. A spread was obtained that exhibits good spreadability (flow limit value 477 g/cm²). The lactose content was 2.3 wt. %.

### Example 2

### Formulation:

| "aqueous phase" | |
|---|---|
| cream (22 wt.% fat) | 7.47 kg |
| water | 8.97 kg |
| sodium caseinate (88 wt.% protein) | 2.33 kg |
| gelatin (Rousselot 101-300 p30) | 0.25 kg |
| anatto colouring E 160 b | 0.02 kg |
| starter distillate (1000 mg diacetyl/kg) | 0.02 kg |
| potassium sorbate | 0.02 kg |

| "fatty phase" | |
|---|---|
| butter | 14.27 kg |
| starter permeate (1800 °N) | 0.34 kg |

The process of Example 1 was repeated with the above-mentioned materials in the amounts specified, with the understanding that the cream was adjusted to a fat content of 10 wt.% by mixing with water. The diameter of the fat globules in the aqueous phase appeared to be 0.8 µm on average; 70.5% of the fat in the aqueous phase consisted of globules having a diameter value below 1.2 µm.

The fatty phase stream was varied in steps such that three final products were obtained having fat contents of, respectively, 42.2 (A), 40.0 (B) and 37.8 wt.% (C). The product A had a flow limit value of 397 g/cm², product B a flow limit value of 304 g/cm², and product C a flow limit value of 236 g/cm². The products A and B exhibited excellent spreadability, product C was somewhat weak in structure. The lactose contents were, respectively, 1.1, 1.2, and 1.2 wt.%. In the organoleptic tests, the panel preferred these products to the product from Example 1.

### Comparative example

### Formulation:

| "aqueous phase" | |
|---|---|
| skimmed milk | 15.0 kg |
| sodium caseinate (88 wt.% protein) | 2.00 kg |
| gelatin (Rousselot 101-300 p30) | 0.25 kg |
| anatto colouring E 160 b | 0.02 kg |
| starter distillate (1000 mg diacetyl/kg) | 0.02 kg |
| potassium sorbate | 0.02 kg |

| "fatty phase" | |
|---|---|
| butter | 16.16 kg |
| starter permeate (1800 °N) | 0.34 kg |

The process of Example 1 was repeated with the above-mentioned materials in the amounts specified, with the understanding that the cream was replaced with skimmed milk (fat content ≦ 0.05 wt.%)

The fat phase stream was set such that the fat content of the spread was 42.2 wt.%.

A spread was obtained having a flow limit value of 633 g/cm². The lactose content was 2.8 wt.%. The spreadability appeared to be insufficient in comparison with the products of Examples 1 and 2. The taste of the spread was rated clearly less in comparison with that of the products of Example 2.

## Claims

1. A process for the continuous preparation of a spread of the water-in-oil type, having a fat content of 30-60 wt.%, based on milk fat, in which a fatty phase and an aqueous phase, to which a milk protein and a thickener have been added, are mixed, characterized in that as the fatty phase butter is used and as the aqueous phase a cream is used in which the average diameter of the fat globules has a value of at most 1.2 µm, which aqueous phase is pumped into the fatty phase continuously.

2. A process according to claim 1, characterized in that a cream is used which has been homogenized at a temperature of 50-90°C and a pressure of 5-20 MPa.

3. A process according to claims 1-2, characterized in that to the fatty phase so much acid is added that the pH value of the spread falls below 5.5.

4. A process according to claims 1-3, characterized in that cream having a fat content of 5-15 wt.% is used.

5. A process according to claims 1-4, characterized in that a cream is used whose lactose content is set such that the content thereof in the spread does not exceed a value of 1.5%.

## Patentansprüche

1. Verfahren für die kontinuierliche Zubereitung eines Brotaufstriches der Wasser-in-Öl-Art, mit einem Fettgehalt von 30 - 60 Gew.%, basierend auf Milchfett, bei dem eine Fettphase und eine wässrige Phase, der ein Milchprotein und ein Verdickungsmittel zugesetzt wurden, gemischt werden,
dadurch gekennzeichnet,
daß als Fettphase Butter benutzt wird und als wässrige Phase eine Sahne benutzt wird, in der der mittlere Durchmesser der Fettglobuli einen Wert von höchstens 1,2 µm hat, wobei die wässrige Phase kontinuierlich in die Fettphase eingepumpt wird.

2. Verfahren gemäß Anspruch 1,
dadurch gekennzeichnet,
daß eine Sahne benutzt wird, die bei einer Temperatur von 50 - 90 °C und einem Druck von 5 - 20 MPa homogenisiert worden ist.

3. Verfahren gemäß Ansprüchen 1 - 2,
dadurch gekennzeichnet,
daß der Fettphase so viel Säure Zugesetzt wird, daß der pH-Wert des Brotaufstriches unter 5,5 fällt.

4. Verfahren gemäß Ansprüchen 1 - 3,
dadurch gekennzeichnet,
daß Sahne benutzt wird, die einen Fettgehalt von 5 - 15 Gew.% hat.

5. Verfahren gemäß Ansprüchen 1 - 4,
dadurch gekennzeichnet,
daß eine Sahne benutzt wird, deren Laktosegehalt so eingestellt ist, daß der Gehalt davon in dem Brotaufstrich einen Wert von 1,5 % nicht übersteigt.

## Revendications

1. Procédé pour la préparation en continu d'une pâte à tartiner du type eau dans huile, présentant une teneur en matière grasse comprise entre 30 et 60 % en poids, à base de la matière grasse de lait, et dans lequel une phase grasse et une phase aqueuse sont mélangées, et auxquelles sont ajoutés une protéine du lait et un agent épaississant, caractérisé en ce que le beurre est choisi comme phase grasse et en ce que la phase aqueuse est constituée par de la crème, dans laquelle le diamètre moyen des globules de matières grasses a une valeur au plus égale à 1,2 µm, ladite phase grasse étant pompée dans la phase aqueuse de manière continue.

2. Procédé selon la revendication 1 caractérisé en ce qu'on utilise une crème homogénéisée à une température comprise entre 50 et 90 °C sous une pression de 5 à 20 MPa.

3. Procédé selon l'une des revendications 1 et 2, caractérisé en ce que, à la phase grasse est ajouté de l'acide en quantité telle que le pH de la pâte à tartiner tombe en dessous de 5,5.

4. Procédé selon l'une des revendications 1 à 3, caractérisé en ce que l'on utilise une crème ayant une teneur en matière grasse comprise entre 5 et 15 % en poids.

5. Procédé selon l'une des revendications 1 à 4, caractérisé en ce qu'on utilise une crème dont la teneur en lactose est fixée de telle sorte que la teneur dudit lactose dans la pâte à tartiner n'excède pas la valeur de 1,5 %.
